# EUROPÄISCHE PATENTANMELDUNG

(11) **EP 1 710 012 A2**
(43) Veröffentlichungstag der Anmeldung: **11.10.2006**
(21) Anmeldenummer: 06118068.3
(22) Anmeldetag: 02.10.2001
(51) Int. Cl.: B01F 5/06, B01F 5/04, B01F 13/00

(54) **Vorrichtung aufweisend einen Statikmischer mit einer Mischerkanalverlängerung**

(30) Priorität: 17.10.2000 CH 20372000
(62) Teilanmeldung aus: 01970077.2
(71) Anmelder: Sika Technology AG, 6340 Baar (CH)
(72) Erfinder: Koch, Reto, 5433, Remetschwil (CH); Dohner, Reto, 8005, Zürich (CH)
(74) Vertreter: Sika Patent Attorneys

(57) **Zusammenfassung**

Die vorliegende Erfindung betrifft eine Vorrichtung aufweisend einen Statikmischer (1) mit einem von einem Mischerkanalgehäuse (5) gebildeten Mischerkanal (4) und mit im Mischerkanal (4) angeordneten Mischmitteln (3, 9) zum Mischen einer Hauptkomponente mit einer oder mehreren Zusatzkomponenten beim Durchströmen des Mischerkanals (4), mit einer am Mischeraustritt angeordneten Mischerkanalverlängerung (20) zur Zuführung eines Materials zur Ummantelung des aus den Mischmitteln (3,9) austretenden Materialstroms, wobei die Mischerkanalverlängerung (20) über eine oder mehrere Zuführungsöffnungen (8) in der Innenwandung der Mischerkanalverlängerung (20) in den verlängerten Mischerkanal einmündende Zuführungsmittel (8, 21) aufweist zum Zuführen einer oder mehrerer extern bereitgestellter Ströme unvermischter Hauptkomponente oder einer weiteren Komponente in den Aussenbereich des aus dem Statikmischer austretenden ganz oder teilweise durchmischten Mischkomponentenstroms zur Bildung einer vollständigen oder teilweisen Ummantelung des Mischkomponentenstrom mit unvermischter Hauptkomponente oder einer weiteren Komponente. Die Vorrichtung eignet sich insbesondere zum Verarbeiten hochviskoser Einkomponentenklebstoffe mit Aushärtebeschleunigern, insbesondere für das Verarbeiten von hochviskosem PU mit Aushärtebeschleunigerpasten.

## Beschreibung

### TECHNISCHES GEBIET

Die vorliegende Erfindung betrifft einen Statikmischer und Teile eines solchen, die Verwendung des Statikmischers und der Teile sowie ein Verfahren und die Anwendung des Verfahrens gemäss den Oberbegriffen der unabhängigen Ansprüche.

### STAND DER TECHNIK

Statikmischer kommen im allgemeinen dort zur Anwendung, wo zwei oder mehr Ströme aus fliessfähigen Stoffen zu einem vollständig oder teilweise durchmischten gemeinsamen fliessfähigen Stoffstrom vermischt werden müssen.

Aus der Klebstoffindustrie ist die Verwendung von Statikmischern zum Vermischen von reaktiven Komponenten bekannt, wobei diese sowohl dem im wesentlichen homogenen Vermischen der Komponenten von Mehrkomponentenklebstoffen als auch zum schichtweisen Einmischen von Aushärtebeschleunigern in Einkomponentenklebstoffe dienen. Speziell bei der letztgenannten Verwendung von Statikmischern zum Erzeugen und Applizieren von Klebstoffraupen kommt es häufig zu Fehlklebungen, weil eine oder mehrere der eingemischten Schichten aus typischerweise nicht selbstaushärtendem Aushärtebeschleuniger im Aussenbereich der Klebstoffraupe zu Tage treten und an die zu verklebende Oberfläche angrenzen.

### DARSTELLUNG DER ERFINDUNG

Es stellt sich daher die Aufgabe, Vorrichtungen und Verwendungen der Vorrichtungen sowie Verfahren und Anwendungen der Verfahren zur Verfügung zu stellen, welche die genannten Nachteile des Standes der Technik nicht aufweisen bzw. diese beheben.

Diese Aufgabe wird von den Gegenständen der unabhängigen Ansprüche gelöst.

In einem ersten Aspekt der Erfindung weist der Statikmischer ein Mischerkanalgehäuse auf, welches einen Mischerkanal bildet, und im Mischerkanal angeordnet, Mischmittel auf, wie beispielsweise Drallflügel oder Verwirbelungskörper, zum Mischen einer Hauptkomponente mit einer oder mehreren mit der Hauptkomponente reaktiven oder nicht reaktiven Zusatzkomponenten. Zusätzlich weist der Statikmischer in den Mischerkanal einmündende externe und/oder interne Zuführungsmittel auf zum Zuführen einer oder mehrerer Ströme unvermischter Hauptkomponente oder einer weiteren Komponente in den Aussenbereich des aus den Mischmitteln austretenden, ganz oder teilweise durchmischten Mischkomponentenstroms. Hierdurch lässt sich der Mischkomponentenstrom ganz oder teilweise mit der zugeführten Komponente ummanteln, so dass ein Austreten einer im Aussenbereich des Mischkomponentenstroms nicht gewünschten Zusatzkomponente im Aussenbereich des Mischkomponentenstroms sicher verhindert werden kann. Die Zuführung der Ummantelungskomponente muss nicht zwangsläufig nach dem letzten Mischmittel erfolgen, sondern kann auch bereits zwischen zwei axial in Strömungsrichtung gesehen nacheinander angeordneten Mischmitteln erfolgen, wobei hierfür bevorzugterweise die letzten Mischerstufen eines mehrstufigen Mischmittels in Frage kommen. Als Hauptkomponente wird hier vorzugsweise die Komponente verstanden, welche den grössten volumetrischen Anteil am Mischkomponentenstrom aufweist und/oder im Eintrittsbereich des Mischerkanals im Wandbereich desselben strömt.

In einem zweiten Aspekt der Erfindung weist der Mischereinsatz, welcher zur Bildung eines Statikmischers gemäss dem ersten Aspekt der Erfindung dient, ein den Mischerkanal bildendes Mischerkanalgehäuse und ein oder mehrere im Mischerkanal angeordnete Mischmittel zum Mischen einer Hauptkomponente mit einer oder mehreren Zusatzkomponenten beim Durchströmen des Mischerkanals und der Mischmittel auf. Die Mischerkanalwandung weist eine oder mehrere sich radial durch das Mischerkanalgehäuse und gegebenenfalls durch weitere zum Mischereinsatz gehörenden Bauteile nach aussen erstreckende Zuführungsöffnungen auf zur Zuführung von Hauptkomponente oder einer weiteren Komponente in den Aussenbereich des aus den Mischmitteln austretenden Mischkomponentenstroms zum teilweisen oder vollständigen Ummanteln des Mischkomponentenstroms mit der zugeführten Komponente. Die Zuführungsöffnungen münden also direkt radial oder indirekt über entsprechende Zuführungskanäle in eine Aussenfläche des Mischereinsatzes ein. Hierdurch kann mit dem Mischereinsatz in Kombination mit einem geeigneten Gehäuse ein Statikmischer der zuvor beschriebenen Art mit den dargelegten Vorteilen gebildet werden. Wie bereits zuvor erwähnt muss die Zuführung nicht nach dem letzten Mischmittel erfolgen, sondern kann, wie schon bei dem Statikmischer gemäss dem ersten Aspekt, auch bereits zwischen zwei axial in Strömungsrichtung gesehen nacheinander angeordneten Mischmitteln erfolgen, was in einem solchen Fall bevorzugterweise im Bereich der letzten Mischerstufen eines mehrstufigen Mischmittels erfolgt.

Ein dritter Aspekt der Erfindung betrifft ein Mischerkanalgehäuse zur Bildung eines Mischerkanals für einen Statikmischer gemäss dem ersten Aspekt oder für einen Mischereinsatz gemäss dem zweiten Aspekt und zur Aufnahme von statischen Mischmitteln in dem Mischerkanal zum Mischen einer Hauptkomponente mit einer oder mehreren Zusatzkomponenten beim Durchströmen des Mischerkanals und der in diesem angeordneten Mischmittel, wobei der Mischerkanal die in radialer Richtung äussere Begrenzung des von den zu mischenden Komponenten durchströmten Querschnitts bildet und die Mischmittel, welche bevorzugterweise von einem mehrstufigen Mischerflügelelement mit Drallflügeln gebildet werden, radial an die Mischerkanalwandung angrenzen. Die Mischerkanalwandung weist eine oder mehrere Zuführungsöffnungen auf zum Zuführen eines oder mehrerer Ströme aus unvermischter Hauptkomponente oder einer weiteren Komponente in den Aussenbereich eines im Betrieb aus den im Mischerkanal angeordneten Mischmitteln austretenden Mischkomponentenstroms. Auch hier muss die Zuführung nicht nach dem letzten Mischmittel erfolgen, sondern kann, wie schon bei dem Statikmischer gemäss dem ersten Aspekt und dem Mischereinsatz gemäss dem zweiten Aspekt, auch bereits zwischen zwei axial in Strömungsrichtung gesehen nacheinander angeordneten Mischmitteln erfolgen, bevorzugterweise jedoch im Bereich der letzten Mischerstufen eines mehrstufigen Mischmittels. Die Anordnung des Mischerkanalgehäuses in einem geeigneten Gehäuse und die Positionierung geeigneter Mischmittel in dem vom Mischerkanalgehäuse gebildeten Mischerkanal ergibt einen erfindungsgemässen Statikmischer gemäss dem ersten Aspekt der Erfindung mit den bereits erwähnten Vorteilen.

In einem vierten Aspekt der Erfindung weist die Mischerkanalverlängerung zur Bildung eines Statikmischers gemäss dem ersten Aspekt durch Anordnung der Mischerkanalverlängerung am Austritt eines Statikmischers, der zum Mischen einer Hauptkomponente mit einer oder mehreren Zusatzkomponenten verwendet wird, Zuführungsmittel auf zum Zuführen einer oder mehrerer extern bereitgestellter Ströme aus unvermischter Hauptkomponente oder einer weiteren Komponente in den Aussenbereich eines aus dem vorgeschalteten Statikmischer austretenden ganz oder teilweise durchmischten Mischkomponentenstroms zur teilweisen oder vollständigen Ummantelung desselben mit der zugeführten Komponente. Diese Zuführungsmittel münden über eine oder mehrere Zuführungsöffnungen in der Innenwandung der Mischerkanalverlängerung in den von dieser gebildeten verlängerten Mischerkanal ein. Extern bereitgestellt bedeutet, dass die zugeführte Komponente von einem weder im Statikmischer noch in der Mischerkanalverlängerung angeordneten Fördermittel gefördert und der Mischerkanalverlängerung zugeführt wird. Es kann sich hierbei um das gleiche oder ein anderes Fördermittel, z.B. eine Pumpe, wie das für die Förderung der Hauptkomponente handeln. Mit der beschriebenen Mischerkanalverlängerung lässt sich in Kombination mit handelsüblichen Statikmischern auf kostengünstige Weise ein erfindungsgemässer Statikmischer gemäss dem ersten Aspekt der Erfindung bilden.

Ein fünfter Aspekt der Erfindung betrifft ein ein- oder mehrstufiges Mischerflügelelement, für einen Statikmischer gemäss dem ersten Aspekt, zur Anordnung in einem rohrförmigen Mischerkanal, dessen Mischerkanalwandung die in radialer Richtung äussere Begrenzung des vom zu mischenden Gut zu durchströmenden Querschnitts bildet und radial an die Mischerflügel des Mischerflügelelements angrenzt. Das Mischerflügelelement dient bevorzugterweise der Bildung eines Statikmischers gemäss dem ersten Aspekt der Erfindung. Der oder die Mischerflügel mindestens einer Mischerstufe des Mischerflügelelements weisen in dem Bereich, der zur Angrenzung an die Wandung eines das Mischerflügelelement aufnehmenden Mischerkanals vorgesehen ist, Durchtrittsöffnungen von der Flügelvorderseite zur Flügelrückseite auf, welche als Bypasskanal für einen Teilstrom eines der zu mischenden Güter um den jeweiligen Mischerflügel herum dient. Auch wäre es denkbar, dass der oder die Mischerflügel lediglich mit radialen Stützelementen, z.B. Stützrippen, radial an die Innenwandung des Mischerkanals angrenzen und auf diese weise zwischen Mischerflügel und Innenwandung in Umfangsrichtung offene oder im Umfangsrichtung geschlossene Bypasskanäle gebildet werden. Es hat sich gezeigt, dass bei vielen Statikmischern erst beim Durchlaufen der letzten Mischerstufe eine Durchmischung bis in den Aussenbereich des Stoffstroms erreicht wird, so dass im Wandbereich des Mischerkanals vor der letzten Mischerstufe meist eine unvermischte Stoffströmung vorliegt, von welcher ein Teilstrom in den Aussenbereich des aus der letzten Mischerflügelelementstufe austretenden Mischstroms zur Ummantelung desselben eingeleitet werden kann. Mit den vorgeschlagenen Mischerflügelelementen lassen sich in Kombination mit einfach ausgestalteten Mischerkanalgehäusen auf kostengünstige Weise erfindungsgemässe Statikmischer gemäss den ersten Aspekt der Erfindung bilden.

In einem sechsten Aspekt der Erfindung wird der Statikmischer gemäss dem ersten Aspekt, der Mischereinsatz gemäss dem zweiten Aspekt, das Mischerkanalgehäuse gemäss dem dritten Aspekt, die Mischerkanalverlängerung gemäss dem vierten Aspekt oder das Mischerflügelelement gemäss dem fünften Aspekt der Erfindung zur Verarbeitung von hochviskosen Einkomponentenklebstoffen mit reaktiven Zusatzkomponenten verwendet, und insbesondere zur Verarbeitung von hochviskosem PU mit einer Aushärtebeschleunigerpaste. Bei der Verarbeitung dieser Stoffe treten die Vorteile der Erfindung besonders deutlich zu Tage.

In einem siebten Aspekt der Erfindung umfasst ein Verfahren zur Bildung eines Stoffstroms aus einer ganz oder teilweise mit einer oder mehreren Zusatzkomponenten vermischten Hauptkomponente, wobei der Stoffstrom teilweise oder vollständig mit unvermischter Hauptkomponente oder einer weiteren Komponente ummantelt ist, die Schritte Vermischen eines Hauptkomponentenstroms mit einem oder mehreren Strömen aus einer oder mehreren reaktiven oder nichtreaktiven Zusatzkomponenten mit einem in einem Mischerkanal angeordneten statischen Mischelement zu einem ganz oder teilweise durchmischten Mischkomponentenstrom und Zuführen eines oder mehrerer Ströme unvermischter Hauptkomponente oder einer weiteren Komponente innerhalb des Mischerkanals in den Aussenbereich des ganz oder teilweise durchmischten Mischkomponentenstroms zur Bildung einer vollständigen oder teilweisen Ummantelung des Mischkomponentenstroms aus unvermischter Hauptkomponente oder aus der weiteren Komponente. Hierdurch lässt sich ein Austreten einer in die Hauptkomponente eingemischten Zusatzkomponente im Aussenbereich des Mischkomponentenstroms verhindern und ein Mischkomponentenstrom mit einem stofflich genau definierten Aussenbereich erzeugen.

In einem letzten Aspekt der Erfindung wird das Verfahren gemäss dem siebten Aspekt der Erfindung angewendet für die Erzeugung einer Klebstoffraupe mit einem Kern aus PU mit schichtweise eingemischter Aushärtebeschleunigerpaste und einer möglichst dünnen Ummantelung aus PU zum Verkleben von Bauteilen, insbesondere von Fahrzeugteilen in der Fahrzeugindustrie.

### KURZE BESCHREIBUNG DER ZEICHNUNGEN

Weitere bevorzugte Ausführungen der Erfindung ergeben sich aus den abhängigen Ansprüchen sowie aus der nun folgenden Beschreibung anhand der Figuren. Dabei zeigen:
- Fig. 1a: einen Längsschnitt durch einen Statikmischer zur Befestigung mit einer Überwurfhülse;
- Fig.: 1b einen Schnitt durch den Statikmischer aus Fig. 1a entlang der Linie A-A;
- Fig. 2a: einen Längsschnitt durch einen anderen Statikmischer zur Befestigung mit einer Überwurfhülse;
- Fig. 2b: einen Schnitt durch den Statikmischer aus Fig. 2a entlang der Linie B-B;
- Fig. 2c: einen Schnitt durch den Statikmischer aus Fig. 2a entlang der Linie C-C;
- Fig. 3a: einen Längsschnitt durch einen weiteren Statikmischer zur Befestigung mit einer Überwurfhülse;
- Fig. 3b: einen Schnitt durch den Statikmischer aus Fig. 3a entlang der Linie D-D;
- Fig. 4a: einen Längsschnitt durch noch einen weiteren Statikmischer zur Befestigung mit einer Überwurfhülse;
- Fig. 4b: einen Schnitt durch den Statikmischer aus Fig. 4a entlang der Linie E-E;
- Fig. 5a: einen Längsschnitt durch einen Statikmischer zum Aufschrauben auf einen Gewindestutzen;
- Fig. 5b: einen Schnitt durch den Statikmischer aus Fig. 5a entlang der Linie F-F, wobei der Mischer einstufige Mischelementsegmenten mit je zwei Drallflügeln aufweist;
- Fig. 5c: einen Schnitt durch den Statikmischer aus Fig. 5a entlang der Linie F-F, wobei der Mischer einstufige Mischelementsegmenten mit je einem Mischerflügel aufweist;
- Fig. 6: einen Längsschnitt durch einen Statikmischer zum Aufschrauben auf einen Gewindestutzen mit einer separat vom Mischereinsatz ausgebildeten Mischerkanalverlängerung;
- Fig. 7: einen Längsschnitt durch einen Statikmischer zum Einschrauben in eine Gewindebuchse mit einem Mischerkanal mit Nebenkanälen um die letzte Mischerstufe herum;
- Fig. 8: eine Seitenansicht eines Mischerflügelelements für einen Statikmischer mit Durchtrittskanälen an der letzten Mischerstufe.

### WEGE ZUR AUSFÜHRUNG DER ERFINDUNG

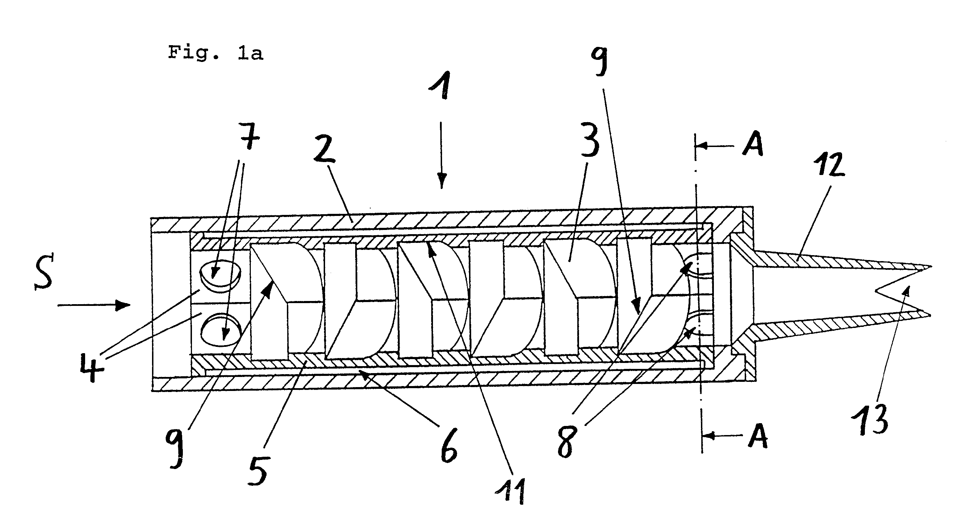

Der Grundaufbau einer bevorzugten Ausführung der Erfindung ist in Fig. 1a dargestellt, welche einen Längsschnitt durch einen Statikmischer 1 zeigt. Der dargestellte Mischer 1 wird bevorzugterweise in der Fahrzeugindustrie zum schichtweisen Einmischen einer Aushärtebeschleunigerpaste in hochviskoses PU verwendet, indem er mittels Überwurfhülse am Austritt einer Zuführungsleitung befestigt wird, aus der ein Hauptkomponentenstrom aus hochviskosem PU austritt, in dessen Zentrum über eine Düse Aushärtebeschleunigerpaste dem PU-Strom zugegeben wird. Wie zu erkennen ist, besteht der Statikmischer 1 aus einem Gehäuseteil 2 mit einer zylindrischen Bohrung, welche einen mehrteiligen Mischereinsatz, bestehend aus einem von zwei Halbschalen 4 gebildeten, einen zylindrischen Mischerkanal ausbildenden Mischerkanalgehäuse 5 und einem mehrstufigen, im Mischerkanal angeordneten, einstückig ausgebildeten Mischerflügelelement 3, umschliesst.

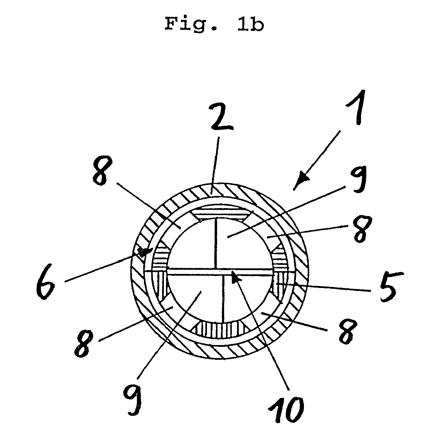

Wie aus Fig. 1a in Verbindung mit Fig. 1b, welche einen Schnitt entlang der Linie A-A in Fig. 1a darstellt, zu entnehmen ist, weist das Mischerkanalgehäuse 5 eine gestufte, zylindrische Aussenkontur auf, welche lediglich an ihren Enden den Durchmesser der das Mischerkanalgehäuse 5 in sich aufnehmenden Bohrung aufweist. Hierdurch ergibt sich über fast die gesamte axiale Erstreckung des Mischerkanals zwischen Mischerkanalgehäuse 5 und Gehäuseteil 2 ein kreisringförmiger Spalt, welcher einen koaxialen Nebenkanal 6 zum Mischerkanal bildet. Der kreisringförmige Spalt 6 ist auf der Eintrittsseite des Mischerkanals über vier in Strömungsrichtung S gesehen vor dem Mischerflügelelement 3 angeordnete und gleichmässig über den Umfang des Mischerkanals verteilte, kreisrunde und sich in radialer Richtung durch das Mischerkanalgehäuse 5 erstreckende Durchgangsöffnungen 7 in der Mischerkanalwandung verbunden, welche als Entnahmeöffnungen 7 für unvermischtes PU aus dem Aussenbereich des im Einlaufbereich des Mischerkanals in das Mischerflügelelement 3 einströmenden PU-Stroms mit einer Seele aus Aushärtebeschleunigerpaste dient. Es wird also über die Entnahmeöffnungen 7 ein unvermischter Hauptkomponententeilstrom aus dem im Mischerkanal strömenden Strom aus Haupt- und Zusatzkomponente entnommen. Axial in Strömungsrichtung S gesehen direkt nach der letzten Mischerstufe des Mischerflügelelements 3 angeordnet weist der Mischerkanal vier langlochähnliche, gleichmässig über den Umfang des Mischerkanals verteilte und sich in radialer Richtung durch das Mischerkanalgehäuse 5 erstreckende Durchtrittsöffnungen 8 auf, welche in den kreisringförmigen Nebenkanal 6 einmünden und als Zuführungsöffnungen 8 für unvermischtes PU vom Nebenkanal 6 in den Aussenbereich des aus der letzten Mischerstufe des Mischerflügelelements 3 austretenden Mischkomponentenstroms dienen. Im dargestellten Fall sind sowohl die Entnahmeöffnungen 7 als auch die Zuführungsöffnungen 8 im Bereich der Enden des Mischerkanals angeordnet, wobei die als Langlöcher im Mischerkanalgehäuse 5 ausgebildeten Zuführungsöffnungen 8 in axialer Richtung zu dem ihnen am nächsten gelegenen Ende des Mischerkanalgehäuses 5 hin geöffnet sind und in dieser Richtung durch die das Mischerkanalgehäuse 5 axial in Durchströmungsrichtung S abstützende Anschlagschulter in der Bohrung des Gehäuseteils 2 begrenzt werden. Das verwendete Mischerflügelelement 3 weist auf jeder seiner sechs Mischerstufen zwei identische, sich jeweils 90° um die zentrale Mischerkanalachse herum erstreckende Drallflügel 9 auf, deren Rampen durch Trennstege 10 voneinander getrennt sind. Das Mischerflügelelement 3 ist derartig ausgestaltet, dass die Drallflügel 9 radial an die Mischerkanalwandung angrenzen und dass axial hintereinander angeordnete Drallflügel 9 eine entgegengesetzte Drallrichtung D aufweisen. Ein solches Mischerflügelelement 3 ist kommerziell als einstückiges Kunststoffspritzgussteil erhältlich und daher äusserst kostengünstig verfügbar. Wie der Schnittdarstellung in Fig. 1a weiter zu entnehmen ist, in welcher das Mischerkanalgehäuse 5 geschnitten dargestellt ist, während das Mischerflügelelement 3 ungeschnitten dargestellt ist, weist die Mischerkanalwandung Vertiefungen 11 auf, welche die Aussenkontur der einzelnen Drallflügel 9 des Mischerflügelelements 3 aufweisen und einen axialen Formschluss zwischen den einzelnen Drallflügeln 9 und dem Mischerkanalgehäuse 5 bewirken. Dieses ist insbesondere bei der hier bevorzugten Verwendung des Statikmischers zum Vermischen hochviskoser Stoffe von Vorteil, weil hierdurch ein Zusammendrücken des Mischerflügelelements 3 infolge hoher Strömungskräfte, und, dadurch verursacht, eine undefinierte Mischergeometrie mit resultierenden schlechten bzw. undefinierten Mischergebnissen, verhindert werden kann. Wie weiter zu erkennen ist, weist der Statikmischer 1 auf seiner Austrittsseite eine Ausbringdüse 12 mit einem dreieckigen Ausschnitt 13 in ihrer Wandung auf, welcher von der Düsenspitze her entgegen der Strömungsrichtung S spitz zuläuft.

Wird der in den Figuren 1a und 1b dargestellte Mischer 1 an einen Zuführungsstutzen angeschlossen und wird ihm über diesen Stutzen ein Strom aus hochviskosem PU mit einer oder mehreren Seelen aus Aushärtebeschleunigerpaste zugeführt, so durchströmt der grösste Teil dieses Gesamtstroms den Mischerkanal und das im Mischerkanal angeordneten Mischerflügelelement 3. Infolge der Anordnung und Geometrie der Drallflügel 9 tritt aus der letzten Mischerstufe ein Mischkomponentenstrom aus, der aus PU mit schichtweise und radial bis in den Randbereich eingemischter Aushärtebeschleunigerpaste besteht. Gleichzeitig wird im Eingangsbereich des Mischerkanals durch die Entnahmeöffnungen 7 in der Mischerkanalwandung ein Teilstrom aus unvermischtem PU in den kreisringförmigen Nebenkanal 6 eingeleitet und in diesem ausserhalb des Mischerkanals um das Mischerflügelelement 3 herumgeführt. In dem Bereich, in welchem der Mischkomponentenstrom aus dem Mischerflügelelement 3 austritt, wird der durch der Nebenkanal 6 geleitete Teilstrom aus unvermischtem PU über die Zuführungsöffnungen 8 in den Aussenbereich des Mischkomponentenstroms eingeleitet. Hierdurch wird der Mischkomponentenstrom zumindest in den Bereichen, in denen Schichten aus eingemischter Aushärtebeschleunigerpaste bis in seinen Aussenbereich hineinreichen, mit unvermischtem PU ummantelt, so dass der aus der Ausbringdüse 12 austretende Klebstoffstrom an seiner Oberfläche ausschliesslich unvermischtes PU aufweist, in seinem Inneren jedoch aus mit feinen Schichten aus Aushärtebeschleunigerpaste durchsetztem PU besteht. Wird der Mischer 1 mit seiner Düse 12 im wesentlichen senkrecht zu einer Applikationsfläche ausgerichtet und entlang der Oberfläche der Applikationsfläche in einer dem dreieckigen Ausschnitt 13 entgegengesetzten Richtung verfahren, so lässt sich eine Klebstoffraupe mit dreieckigem Querschnitt und mit dem zuvor beschriebenen Aufbau auf der Oberfläche applizieren.

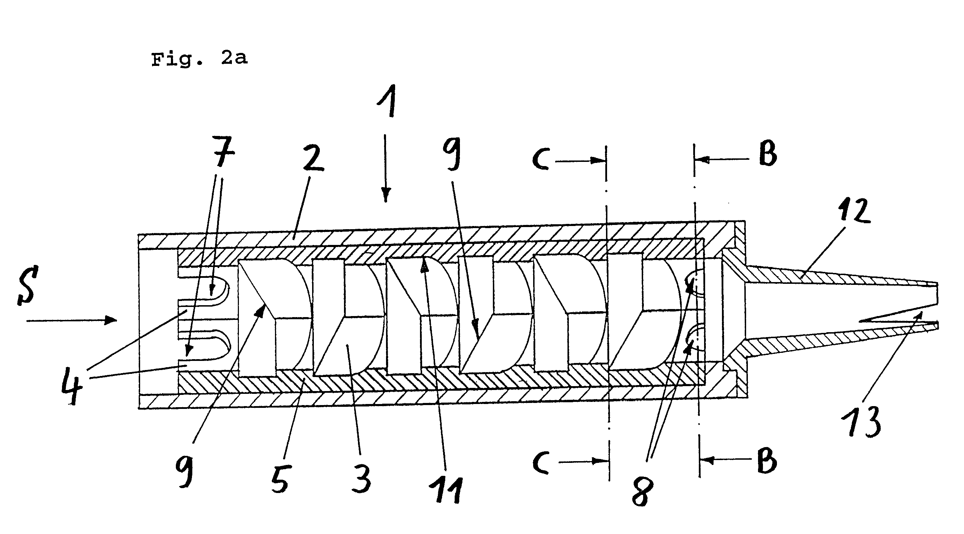

Fig. 2a zeigt einen anderen Statikmischer 1 mit einem ähnlichen Aufbau wie der Mischer 1 in Fig. 1a. Der hier dargestellte Mischer 1 weist ebenfalls ein Gehäuseteil 2, einen Mischereinsatz, umfassend ein den Mischerkanal bildendes Mischerkanalgehäuse 5 und ein Mischerflügelelement 3, und eine Ausbringdüse 12 mit dreieckigem Ausschnitt 13 auf. Auch dieser Mischer 1 ist für die Befestigung mittels einer Überwurfhülse oder mittels eines zusätzlichen Gehäuseteils an einer Zuführungsleitung vorgesehen. Im Gegensatz zu dem zuvor beschriebenen Statikmischer 1 sind hier auch die Entnahmeöffnungen 7 als axial zum nächstliegenden Ende des Mischerkanalgehäuses 5 hin offenen Langlöcher 7 in der Mischerkanalwandung ausgebildet, wobei vorgesehen ist, das diese von einer axial an das Mischerkanalgehäuse 5 anliegenden Schulter der vorgeschalteten Zuführungsleitung begrenzt werden. Die Zuführungsöffnungen 8 sind hier als radiale Öffnungen mit einem kreisabschnittförmigen Querschnitt ausgeführt. Wie zu erkennen ist, ist der Querschnitt der Entnahmeöffnungen 7 deutlich grösser als derjenige der Zuführungsöffnungen 8, wodurch sich der Druckverlust beim Abzweigen des PU-Teilstroms so gering wie möglich halten lässt.

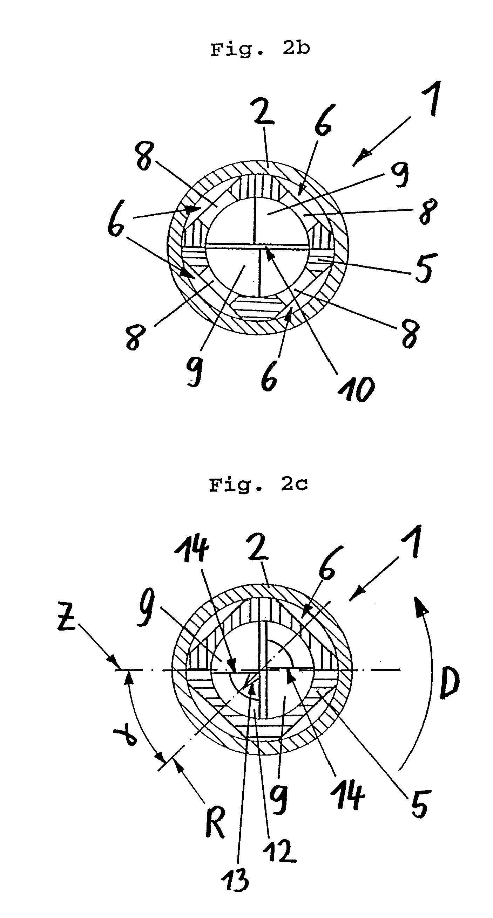

Wie aus Fig. 2b ersichtlich ist, welche einen Schnitt entlang der Linie B-B von Fig. 2a zeigt, weist der Mischereinsatz dieser Ausführungsvariante eine Aussenkontur auf, die von einem Zylinder mit vier gleichmässig an seinem Umfang verteilten, in axialer Richtung sich erstreckenden Abplattungen gebildet wird. Hierdurch ergeben sich über die gesamte axiale Erstreckung des Mischereinsatzes bzw. des Mischerkanalgehäuses 5 zwischen Mischerkanalgehäuse 5 und Gehäuseteil 2 vier parallel zur Mischerkanalachse verlaufende Nebenkanäle 6 mit kreisabschnittförmigem Querschnitt, welche jeweils dem Transport eines PU-Teilstroms zwischen je einer Entnahmeöffnung 7 und einer Zuführungsöffnung 8 dienen. Es münden also jeweils genau eine Entnahmeöffnung 7 und genau eine Zuführungsöffnung 8 in eine gemeinsame, von einer Abplattung gebildete, parallel zur Mischerkanalachse ausgerichtete Aussenfläche des Mischerkanalgehäuses 5 ein. Durch diese Ausgestaltung ergeben sich also mehrere voneinander unabhängige Nebenkanäle 6 mit zugehörigen Entnahme- und Zuführungsöffnungen 7, 8, was für den Fall der Blockierung eines Kanals 6 durch unbeabsichtigtes Aushärten eines PU-Teilstroms im Kanal 6, z.B. während einer Betriebspause, die Betriebssicherheit des Mischers 1 erhöht. Ein ähnliches Ergebnis liesse sich zum Beispiel auch durch dass Anbringen axialer Nuten an einer sonst zylindrischen Aussenkontur eines Mischerkanalgehäuses 5 erreichen. Werden je zwei oder sogar mehrere separate Nebenkanäle 6 zur Speisung einer gemeinsamen Zuführungsöffnung 8 verwendet, lässt sich die Betriebssicherheit noch weiter steigern.

Wie in Fig. 2c zu erkennen ist, welche einen Schnitt entlang der Linie C-C von Fig. 2a zeigt, bilden die in Strömungsrichtung S gesehen zuletzt auf einer gemeinsamen axialen Position im Mischerkanal angeordneten Drallflügel 9, also die Drallflügel 9 der letzten Mischerstufe des Mischerflügelelements 3, ein Drallflügelpaar, derart, dass die Austrittskanten 14 der Drallflügel 9 sich im wesentlichen zu einer Linie Z verbinden lassen, die durch das Zentrum des Mischerkanals geht. Das Drallflügelpaar und die Ausbringdüse 12 sind im dargestellten Fall derartig zueinander ausgerichtet, dass sich zwischen der von den Drallflügelaustrittskanten 14 gebildeten Linie Z und einer Radiallinie R durch die Mitte des dreieckigen Ausschnitts 13 der Düse 12 ein Winkel α von 45° ergibt, wobei sich dieser Winkel α ausgehend von der Radiallinie R entgegen der Drallrichtung D des Drallflügelpaares aufspannt. Es hat sich gezeigt, dass hierdurch eine besonders vorteilhafte Anordnung der Aushärtebeschleunigerpastenschichten in einer mit der Düse 12 applizierten Klebstoffraupe erzielt werden kann, wodurch sich auch bei einem totalen Ausfall der Nebenkanäle 6 zumindest grobe Fehlklebungen infolge eines Austretens von Aushärtebeschleunigerschichten in dem Bereich der Klebstoffraupe, welcher eine direkte Kontaktfläche zu den zu verklebenden Flächen bildet, vermeiden lässt.

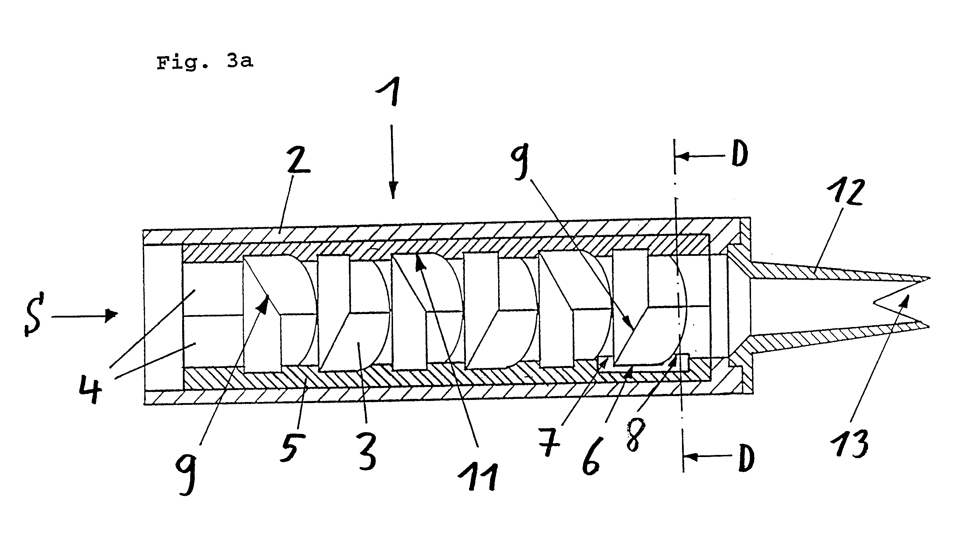

Fig. 3a zeigt einen weiteren Statikmischer 1, der im wesentlichen aus den gleichen Bauteilen besteht wie die Statikmischer 1 in den Figuren 1a und 2a. Im Gegensatz zu den zuvor beschriebenen Statikmischern 1 weist das zweiteilige, aus zwei Halbschalen 4 gebildete Mischerkanalgehäuse 5 jedoch eine zylindrische Aussenkontur auf, die mit der Kontur der Innenwandung der die Halbschalen 4 aufnehmenden Bohrung im Gehäuseteil 2 genau übereinstimmt, derart, dass kein Spalt mit nennenswertem Querschnitt zwischen diesen vorhanden ist. Auch weist die Mischerkanalwandung keine sich radial durch das Mischerkanalgehäuse 5 nach aussen erstreckende Durchtrittsöffnungen 7, 8 für die Entnahme und/oder Zuführung eines unvermischten PU-Teilstroms auf. Gehäuseteil 2 und Mischerkanalgehäuse 5 bilden also im dargestellten Beispiel im Gegensatz zu den vorhergehenden Beispielen keinen Nebenkanal zum Transport von unvermischtem PU.

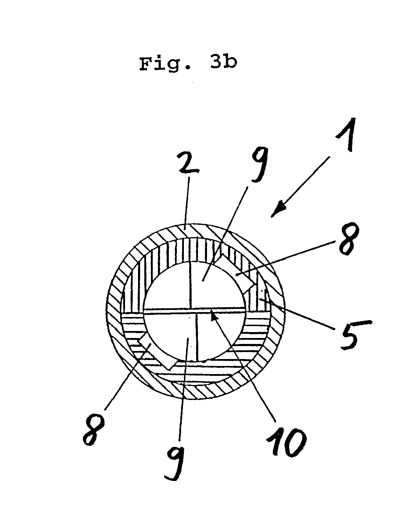

Wie aus Fig. 3a zusammen mit Fig. 3b, welche einen Schnitt entlang der Linie D-D in Fig. 3a zeigt, hervorgeht, weist die Mischerkanalwandung im Bereich der letzten Mischerstufe zwei sich parallel zur Mischerkanalachse erstreckende Nuten 6 auf, welche zusammen mit den beiden radial an die Mischerkanalwandung angrenzenden Drallflügeln 9 dieser Stufe zwei Nebenkanäle 6 um diese Drallflügel 9 herum bilden. Denkbar wäre es ebenso, Taschen an Stelle von Nuten 6 an der Innenwandung des Mischerkanals anzubringen, welche typischerweise über eine grössere Erstreckung in Umfangsrichtung verfügen, z.B. über eine Umgangserstreckung von 90°. Die axiale Erstreckung der Nuten 6 ist derart, dass sie sowohl in Strömungsrichtung S gesehen als auch entgegen der Strömungsrichtung S gesehen über die Erstreckung des jeweiligen Drallflügels 9 im Wandungsbereich hinausgehen und dadurch vor dem jeweiligen Drallflügel 9 eine Entnahmeöffnung 7 und nach diesem eine Zuführungsöffnung 8 bilden. Die Mischerkanalwandung ist also derartig ausgestaltet, dass sie Bypasskanäle 6 zum Umleiten von Teilströmen des im Bereich der Mischerkanalwandung strömenden PUs um die Mischerflügel 9 der letzten Stufe des Mischerflügelelements 3 herum aufweist. Wird die Anzahl der Mischerstufen so ausgelegt wird, dass erst beim Durchlaufen der letzten Mischerstufe Aushärtebeschleunigerpaste bis in den Aussenbereich eingemischt wird, befindet sich im Wandbereich vor dem letzten Drallflügelpaar noch eine Strömung aus unvermischtem PU, von welcher Teilströme über die Entnahmeöffnungen 7 in die Nebenkanäle 6 eingeleitet und von dort aus über die direkt hinter den jeweiligen Drallflügeln 9 angeordneten Zuführungsöffnungen 8 in den Aussenbereich des aus der letzten Mischerflügelelementstufe austretenden Stroms aus PU mit schichtweise eingemischter Aushärtebeschleunigerpaste eingeleitet werden. Die radiale Position der Kanäle 6 bzw. der Zuführungsöffnungen 8 wird bevorzugterweise derartig gewählt, dass ein Zuführen von PU in den Bereich erfolgt, in welchem Schichten aus Aushärtebeschleunigerpaste in den Aussenbereich des Mischstroms vordringen.

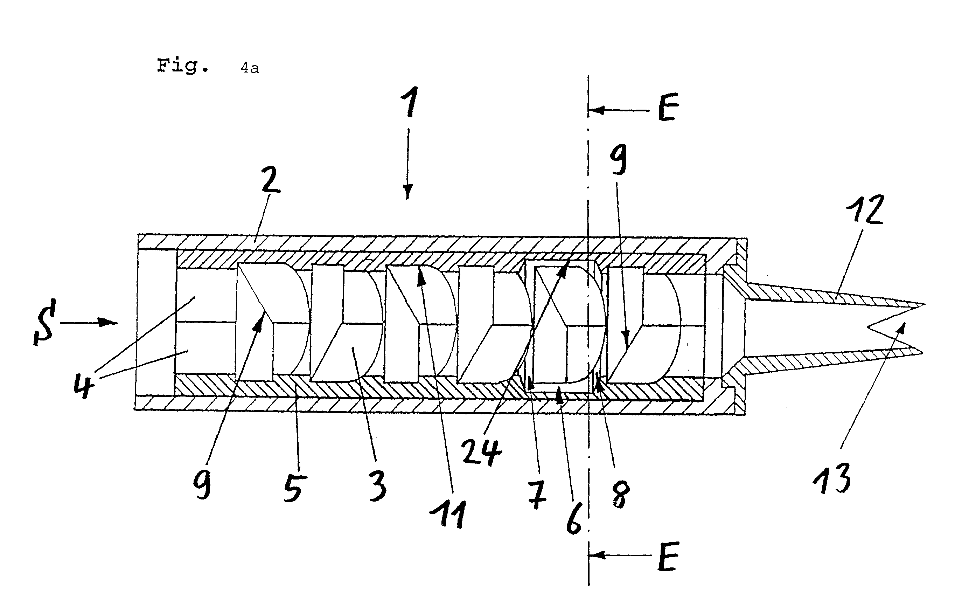

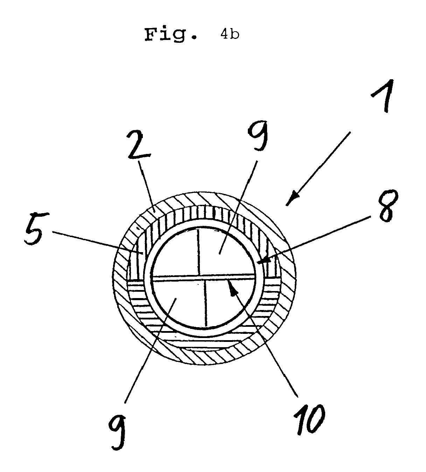

Fig. 4a zeigt einen weiteren Statikmischer 1 mit einem im wesentlichen gleichen Aufbau wie der in den Figuren 3a und 3b gezeigte Statikmischer. Wie aus Fig. 4a zusammen mit Fig. 4b, welche einen Schnitt entlang der Linie E-E in Fig. 4a zeigt, zu erkennen ist, weist die Mischerkanalwandung des hier dargestellten Mischers 1 im Gegensatz zu dem zuvor gezeigten Mischer auf ihrer Innenseite eine sich über ihren Umfang erstreckende Vertiefung 24 auf, welche axial derart positioniert ist, dass sie im Bereich der radialen Angrenzung der Drallflügel 9 der vorletzten Mischerstufe des Mischerflügelelements 3 zusammen mit den radialen Begrenzungen dieser Drallflügel 9 kreisringsegmentförmige Umfangsspalten 6 bildet. Zudem ist die axiale Erstreckung der Vertiefung 24 derart, dass direkt vor den jeweiligen Drallflügeln eine entsprechende Entnahmeöffnung 7 und direkt hinter diesen eine entsprechende Zuführungsöffnung 8 gebildet wird, so dass die vorletzte Mischerstufe im dargestellten Fall lediglich von der drittletzten und der letzten Mischerstufe gehalten und im Mischerkanal positioniert. In den Umfangsbereichen, in denen sich keine Drallflügel befinden, bildet die Vertiefung 24 die in radialer Richtung äussere Begrenzung des von allen Komponenten durchströmten Querschnitts. Wird die Anzahl der Mischerstufen so ausgelegt wird, dass beim Durchlaufen der drittletzten Mischerstufe noch keine Aushärtebeschleunigerpaste bis in den Aussenbereich eingemischt wird, befindet sich im Wandbereich vor der vorletzten Mischerstufe noch eine Strömung aus unvermischtem PU, welche in diesem Fall als geschlossene Hüllströmung um die vorletzte Mischerstufe herum geführt wird, wobei zu beachten ist, dass die Dicke dieser Hüllströmung gross genug sein sollte, um ein Vordringen von Aushärtebeschleunigerpaste in den Aussenbereich des Mischstroms auch nach dem Durchlaufen der letzten Mischerstufe sicher zu verhindern.

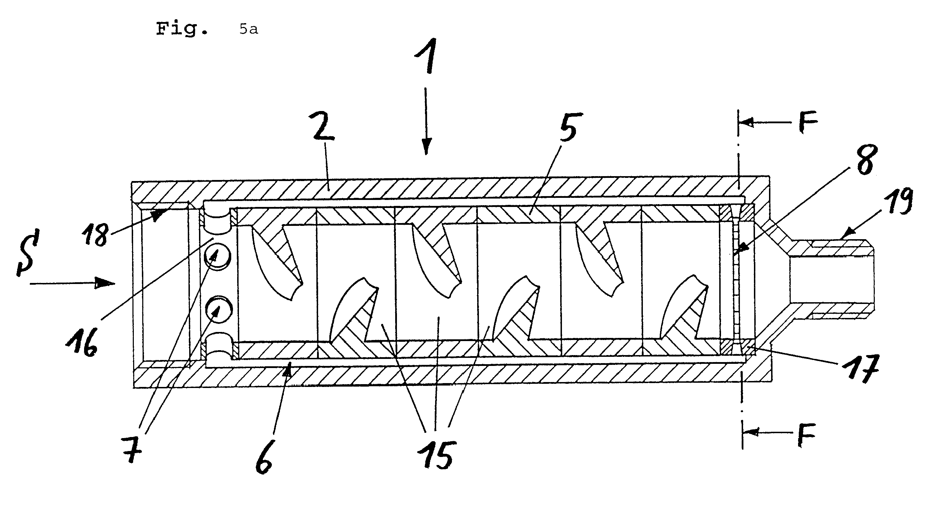

Fig. 5a zeigt einen Längsschnitt durch einen Statikmischer 1, dessen Mischerkanal und dessen Mischmittel durch einstückige, hintereinander angeordnete einstufige Mischelementsegmente 15 mit zylindrischer Aussenkontur gebildet werden. In Strömungsrichtung S gesehen vor dem ersten Mischelementsegment 15 angeordnet ist ein Lochring 16 mit acht gleichmässig über seinen Umfang verteilten radialen Bohrungen 7. In Strömungsrichtung S gesehen nach dem letzten Mischelementsegment 15 angeordnet ist eine Ringdüse 17, die aus zwei von radialen Stützstegen getrennten Ringen besteht. Die Innendurchmesser des Lochrings 16 und der Ringdüse 17 entsprechen dem Durchmesser des von den Mischelementsegmenten 15 gebildeten Mischerkanalteilstücks, deren Aussendurchmesser dem Aussendurchmesser der Mischelementsegmente 15. Der Düsenring 17, die Mischelementsegmente 15 und der Lochring 16 sind in einer Öffnung im Mischergehäuse 2 angeordnet.

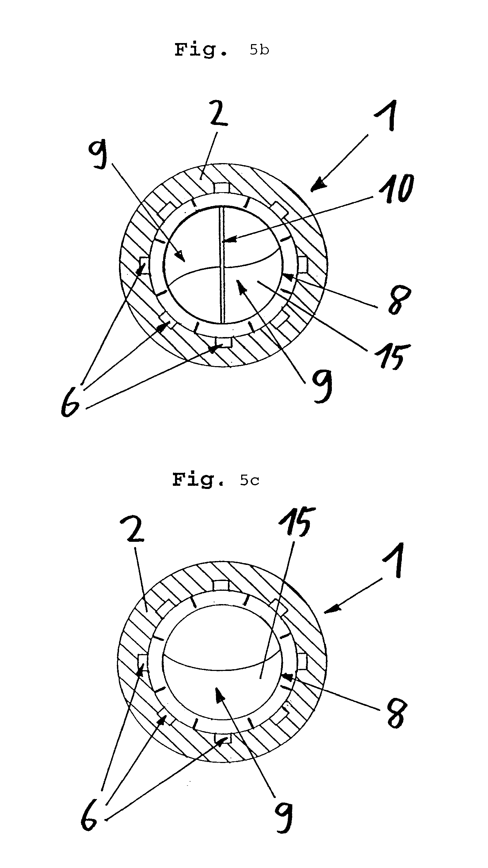

Wie der Fig. 5b, welche einen Schnitt entlang der Linie F-F in Fig. 5a darstellt, entnommen werden kann, ist diese Öffnung im Gehäuse 2 eine zylindrische Bohrung mit einem Innendurchmesser, der im wesentlichen gleich dem Aussendurchmesser des Düsenrings 17, der Mischelementsegmente 15 und des Lochrings 16 ist. Die Innenwandung der Bohrung im Gehäuse 2 weist acht gleichmässig über den Umfang der Bohrung verteilt angeordnete Axialnuten 6 auf, welche als parallel zur Mischerkanalachse angeordnete Nebenkanäle 6 dem Transport von unvermischtem PU dienen und jeweils von einer der acht Bohrungen 7 des Lochrings 16, welche als Entnahmeöffnungen 7 dienen, gespeist werden. Die Axialnuten 6 münden in den Düsenring 17 ein, dessen Ringdüse 8 als Zuführungsöffnung 8 der Zuführung von unvermischtem PU in den Aussenbereich des aus dem letzten Mischelementsegment 15 austretenden Mischstroms dient, derart, dass dieser Strom vollständig von einer dünnen Schicht unvermischten PUs ummantelt wird. Die einstufigen Mischelementsegmente 15 in Fig. 5b weisen zwei gleiche Drallflügel 9 auf, deren Rampen 9 durch einen Trennsteg 10 voneinander getrennt sind. Im Gegensatz zu Fig. 5b zeigt Fig. 5c den Mischer aus Fig. 5a im Schnitt entlang der Linie F-F mit einstufigen Mischelementsegmenten 15, welche jeweils nur einen einzigen Mischerflügel 9 aufweisen.

Wie aus Fig. 5a ersichtlich ist, weist das Mischergehäuse 2 bei dem hier dargestellten Statikmischer 1 an seinem Eintritt ein Innengewinde 18 zur Befestigung des Mischers 1 am Gewindestutzen eines Zuführungsorgans, z.B. eine PU-führende Rohrleitung mit zentraler Aushärtebeschleunigerpastendüse, auf. Der in das Innengewinde 18 einzuschraubende Gewindestutzen des Zuführungselements bildet bevorzugterweise eine Schulter, welche beim Anschrauben des Mischers 1 an den Stutzen den Lochring 16, die Mischelementsegmente 15 und den Düsenring 17 axial gegeneinander presst. Zudem weist der Zuführungskanal eines geeigneten Gewindestutzens bevorzugterweise den Innendurchmesser des Lochrings 16 auf, wodurch unnötige Störungen der Strömung im Eintrittsbereich des Mischerkanals vermieden werden. Die Austrittsseite des Mischers 1 bildet ein Gewindestutzen 19 zur Befestigung einer Ausbringdüse 12 oder eines Weiterleitungselements, z.B. einer Transportleitung, am Statikmischer 1.

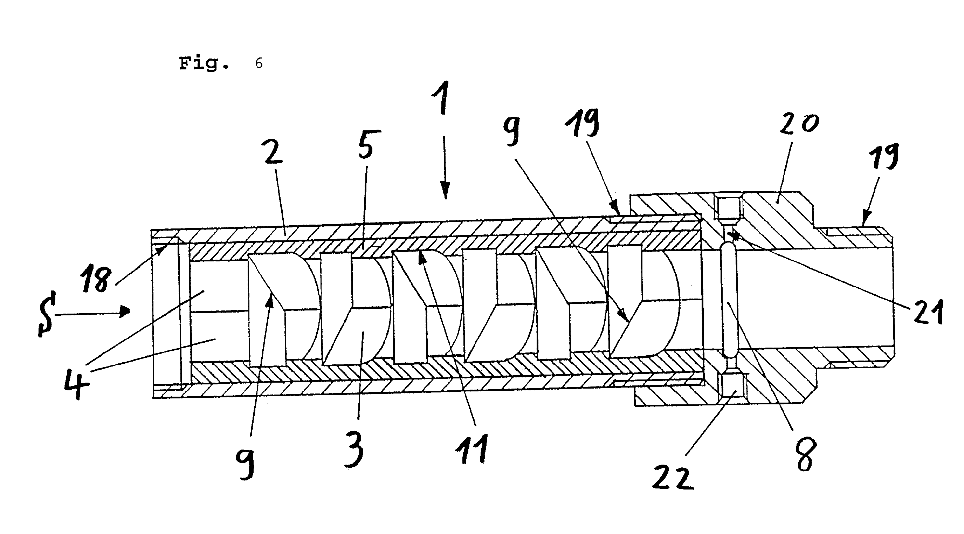

Fig. 6 zeigt einen Längsschnitt durch einen Statikmischer 1 mit einer am Mischeraustritt angeordneten Mischerkanalverlängerung 20 zur Zuführung eines Materials zur Ummantelung des aus den Mischmitteln 3, 9 austretenden Materialstroms. Der Statikmischer weist einen Mischereinsatz auf, dessen Mischerkanalgehäuse 5, wie bei den Statikmischern der Figuren 1a bis 4a, von zwei Halbschalen 4 gebildet wird, in welchen das bereits aus diesen Figuren bekannte Mischerflügelelement 3 in der bereits beschriebenen Art und Weise angeordnet ist. Die Aussenkontur des Mischerkanalgehäuses 5 ist zylindrisch. Die beiden Mischerkanalhalbschalen 4 werden von einem kreiszylinderförmigen Mischergehäuse 2 umschlossen und zusammengehalten, welches auf der Eintrittsseite ein Innengewinde 18 zum Anschluss des Mischers 1 an einen Zuführungsstutzen aufweist. Auch hier ist es vorgesehen, dass der Zuführungsstutzen im Betrieb eine axial an die Halbschalen 4 anstossende Schulter bildet und der Zuführungskanal des Stutzens in etwa den Innendurchmesser des Mischerkanals aufweist. Auf der Austrittsseite weist das Mischergehäuse 2 ein Aussengewinde 19 und eine auf dieses Gewinde 19 aufgeschraubte, separat ausgebildete Mischerkanalverlängerung 20 auf, die ihrerseits wiederum auf ihrer Austrittsseite einen Gewindestutzen 19 zur Befestigung weiterführender Elemente, wie z.B. Düsen 12 oder Leitungen, aufweist. Die Mischerkanalverlängerung 20 führt im dargestellten Fall den Mischerkanal ohne Veränderung des Mischerkanalquerschnitts bis in den Gewindestutzen 19 weiter. Es ist jedoch ebenso vorgesehen, dass sich der Mischerkanal innerhalb der Mischerkanalverlängerung 20 zu deren Austritt hin verjüngt. Wie der Darstellung zu entnehmen ist, weist die Mischerkanalwandung der Mischerkanalverlängerung 20 eine umlaufende Nut 8 von halbkreisförmigem Querschnitt auf, welche mit radial nach aussen führenden Bohrungen 21 in Verbindung steht und als Zuführungsöffnung 8 für ein über die Bohrungen 21 zugeführtes Ummantelungsmaterial in den Aussenbereich des aus dem Mischerflügelelement 3 austretenden Mischstroms dient. Dient der Mischer 1, wie in den vorherigen Beispielen, dem schichtweisen Einmischen von einer Aushärtebeschleunigerpaste in einen Strom aus hochviskosem PU, so wird über die Bohrungen bevorzugterweise unvermischtes PU zugeführt. Es ist jedoch ebenso denkbar, eine weitere Komponente, welche den Aussenbereich des aus der Mischerkanalverlängerung 20 austretenden Materialstroms bilden soll, zuzuführen. Dieses ist insbesondere deshalb möglich, weil durch den dargestellten Aufbau eine externe Zuführung von Material möglich ist und somit nicht zwangsläufig ein in den Mischer eintretendes Material als Ummantelungsmaterial verwendet werden muss. Auch wenn im dargestellten Fall die Zuführungsöffnung 8 eine umlaufende Nut 8 ist, welche eine vollständige Ummantelung ermöglicht, so ist es auch hier vorgesehen, mehrere, radial nicht vollständig umlaufende Öffnungen 8 derartig am Umfang des Mischerkanals zu plazieren, dass lediglich an Positionen, an denen eingemischte Zusatzkomponentenschichten in den Aussenbereich des aus der letzten Mischerstufe austretenden Mischstroms eintreten, eine Teilummantelung des Materialstroms bzw. ein Abdecken der austretenden Zusatzkomponentenschichten stattfindet. In diesem Fall ist es von herausragender Bedeutung sicherzustellen, dass zwischen der letzten Mischerstufe und den Zuführungsöffnungen 8 eine möglichst kurze axiale Distanz und eine definierte radiale Positionierung vorliegt. Wie weiter aus Fig. 6 hervorgeht, weisen die radialen Zuführungsbohrungen 21 an ihren nach aussen zeigenden Enden jeweils ein Innengewinde 22 zum Anschliessen von Zuführungsleitungen für Ummantelungsmaterial auf. Auch wenn hier Innengewinde 22 verwendet werden, so sind generell alle bekannten Anschlussmittel geeignet, welche eine im wesentlichen dichte Verbindung zwischen Zuführungskanal 21 und externer Materialzuführung gewährleisten, z.B. auch Gewindestutzen mit Aussengewinde, Bajonettanschlüsse, Schnellkupplungsstutzen usw. Zudem ist es auch vorgesehen, eine ähnliche Anordnung mit nicht separat ausgebildetem Mischergehäuse 2 bzw. Mischerkanalgehäuse 5 und Mischerkanalverlängerung 20 auszubilden, wodurch sich ein Statikmischer 1 mit einem verlängerten Mischerkanalauslauf ergibt, welcher Zuführungsmittel für die externe Zuführung von Ummantelungsmaterial aufweist.

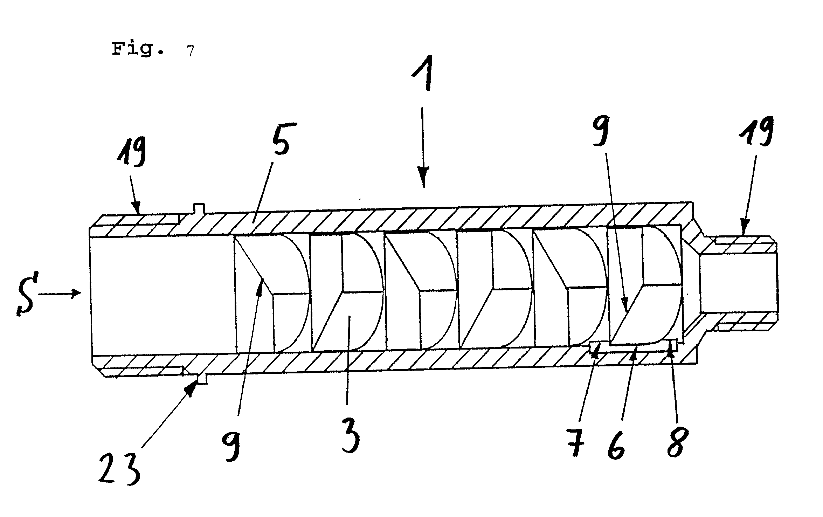

Fig. 7 zeigt einen Längsschnitt durch einen anderen Statikmischer 1, bei dem das einstückig ausgebildete Mischerkanalgehäuse 5 gleichzeitig das Mischergehäuse bildet. Auch im hier dargestellten Fall kommt das bereits aus den Figuren 1a, 2a, 3a, 4a und 6 bekannte Mischerflügelelement 3 zum Einsatz. Im Gegensatz zu den zuvor erwähnten Ausführungsbeispielen werden die Mischerflügel 9 des Mischerflügelelement 3 bei diesem Statikmischer 1 lediglich radial von der Mischerkanalwandung geführt, nicht jedoch, wie bei den anderen Beispielen, durch Formschluss in axialer Richtung von dieser gestützt. Das Mischerflügelelement 3 stützt sich hier in axialer Richtung mit seiner in Strömungsrichtung S gesehen letzten Mischerstufe an einer Schulter am Ende des Mischerkanals am Mischerkanalgehäuse 5 ab. Das Mischerkanalgehäuse 5 ist hier also im wesentlichen als Kreisringzylinder ausgebildet, in dessen Mischerkanal das Mischerflügelelement 3 axial eingeschoben wird. Wie der Schnittdarstellung zu entnehmen ist, weist die Mischerkanalwandung, ähnlich wie bei dem Mischer in Fig. 3a, im Bereich der letzten Mischerstufe sich parallel zur Mischerkanalachse erstreckende Nuten 6 auf, welche zusammen mit den radial an die Mischerkanalwandung angrenzenden Mischerflügeln 9 dieser Stufe Nebenkanäle 6 um diese Mischerstufe bzw. um die Mischerflügel 9 dieser Mischerstufe herum bilden. Die axiale Erstreckung der Nuten 6 ist derart, dass sie sowohl in Strömungsrichtung S gesehen als auch entgegen der Strömungsrichtung S gesehen über die Erstreckung der jeweiligen Mischerflügel 9 im Wandungsbereich hinausgehen und dadurch vor der letzten Mischerstufe eine oder mehrere Entnahmeöffnungen 7 und nach dieser eine oder mehrere Zuführungsöffnungen 8 bilden. Auch hier ist die Mischerkanalwandung also derartig ausgestaltet, dass sie Bypasskanäle 6 zum Umleiten eines Teilstroms um die Mischerflügel 9 der letzten Stufe des Mischerflügelelements 3 herum aufweist. Die Funktionsweise und die bevorzugte Positionierung der Kanäle 6 sind bei diesem Ausführungsbeispiel identisch wie bei Fig. 3a. Das einstückige Mischerkanalgehäuse 5, welches in diesem Fall auch das Mischergehäuse bildet, weist hier im Gegensatz zu den zuvor vorgestellten Lösungen im Eintrittsbereich ein Aussengewinde 19 mit einer Anschlagschulter 23 zum Anschluss an ein Zuführungsorgan auf. Auf diese Weise lässt sich eine genaue axiale Positionierung des Mischers 1 am Austritt eines Zuführungsorgans sicherstellen. Der Austritt des Mischers ist als Gewindestutzen 19 wie bereits bei Fig. 5a beschrieben ausgestaltet.

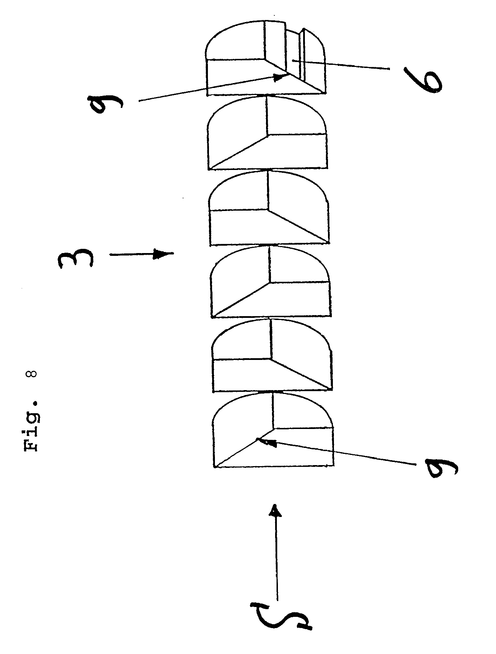

Fig. 8 zeigt eine Seitenansicht eines einstückigen sechsstufigen Mischerflügelelements 3, welches zur Anordnung in einem zylindrischen Mischerkanal vorgesehen ist, derart, dass die Mischerflügel 9 radial an die Mischerkanalwandung angrenzen. Wie zu erkennen ist, weisen die Mischerflügel 9 der in Strömungsrichtung S gesehen letzten Mischerstufe in dem Bereich, der zur radialen Angrenzung an die Mischerkanalwandung vorgesehen ist, Durchtrittskanäle 6 auf, welche einen Durchtritt von Material im Wandbereich von der Flügelvorderseite auf die Flügelrückseite ermöglichen und somit auch hier einen Bypass 6 für einen Komponententeilstrom um den jeweiligen Mischerflügel 9 herum bereitstellen. Die Funktionsweise dieser Durchtrittskanäle 6 ist bei Anordnung des Mischerflügelelements 3 in einem zylindrischen Mischerkanal die gleiche wie bei den Figuren 3a, 3b und 6, jedoch werden hier die Zuführungsmittel 6, 7, 8 im wesentlichen durch die Ausgestaltung des Mischerflügelelements 3 erzielt, was die Verwendung äusserst einfacher und damit kostengünstiger Mischerkanalgehäuse 5 erlaubt.

Mit Vorteil werden die einzelnen Bestandteile der zuvor beschriebenen erfindungsgemässen Mischer aus Kunststoff im Spritzgussverfahren hergestellt, da sich hierdurch eine kostengünstige Serienproduktion realisieren lässt, welche die Verwendung der Mischer als Einwegmischer wirtschaftlich macht. Es ist jedoch ebenso vorgesehen, einzelne Teile des Mischer, z.B. Gehäuseteile 2, 5 oder die beschriebene Mischerkanalverlängerung 20, aus anderen Materialien, insbesondere Metall, herzustellen.

Auch wenn die Ausführungsbeispiele im wesentlichen am Beispiel einer Vermischung von hochviskosem PU mit einer Aushärtebeschleunigerpaste beschrieben wurden, so sei an dieser Stelle darauf hingewiesen, dass die Erfindung nicht auf diese Anwendung beschränkt ist, sondern sich mit Vorteil auch für das Vermischen anderer reaktiver oder auch nicht reaktiver Stoffe miteinander eignet, bei denen sichergestellt werden soll, dass der Aussenbereich des Mischstroms von einem Stoff genau definierter Zusammensetzung gebildet wird. Werden Zuführungsöffnungen 8 verwendet, welche eine in Umfangsrichtung gesehen begrenzte Erstreckung aufweisen, so sind diese mit Vorteil unter Berücksichtigung des vom jeweiligen Mischmitteln 3, 9, 15 erzeugten spezifischen Einmischbildes axial möglichst nah am Austritt des Mischmittels und radial so am Umfang des Mischerkanals zu positionieren, dass die Zuführung dort erfolgt, wo nicht erwünschtes Material bis in den Aussenbereich des Mischstroms hinein vordringt. Da diese Bereiche, wie bereits erwähnt wurde, vom einzelnen Mischerelement 3, 9, 15 abhängig sind und insbesondere von dessen Geometrie im Austrittsbereich, ist es offensichtlich, dass eine genaue und zudem dauerhafte Positionierung, axial wie radial, zwischen Mischmitteln 3, 9, 15 und Zuführungsöffnungen 8 unabdingbar ist für ein gutes und reproduzierbares Ergebnis. Geeignete Positioniermittel, z.B. Positioniernasen und Anschlagschultern, sind dem Fachmann geläufig und werden daher nicht näher erläutert.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Vorrichtung aufweisend einen Statikmischer (1) mit einem von einem Mischerkanalgehäuse (5) gebildeten Mischerkanal (4) und mit im Mischerkanal (4) angeordneten Mischmitteln (3, 9) zum Mischen einer Hauptkomponente mit einer oder mehreren Zusatzkomponenten beim Durchströmen des Mischerkanals (4), mit einer am Mischeraustritt angeordneten Mischerkanalverlängerung (20) zur Zuführung eines Materials zur Ummantelung des aus den Mischmitteln (3,9) austretenden Materialstroms, wobei die Mischerkanalverlängerung (20) über eine oder mehrere Zuführungsöffnungen (8) in der Innenwandung der Mischerkanalverlängerung (20) in den verlängerten Mischerkanal einmündende Zuführungsmittel (8, 21) aufweist zum Zuführen einer oder mehrerer extern bereitgestellter Ströme unvermischter Hauptkomponente oder einer weiteren Komponente in den Aussenbereich des aus dem Statikmischer austretenden ganz oder teilweise durchmischten Mischkomponentenstroms zur Bildung einer vollständigen oder teilweisen Ummantelung des Mischkomponentenstrom mit unvermischter Hauptkomponente oder einer weiteren Komponente.

2. Vorrichtung gemäss Anspruch 1, **dadurch gekennzeichnet, dass** die Zuführungsöffnung (8) als radial umlaufenden Nut (8) oder Ringdüse ausgebildet ist.

3. Vorrichtung gemäss Anspruch 1 oder 2, **dadurch gekennzeichnet, dass** die Mischerkanalverlängerung (20) Anschlussmittel (18, 19), insbesondere Verschraubungselemente (18, 19), aufweist für die Befestigung ihres Eintritts am Ausgang eines Statikmischers und/oder für die Befestigung einer Ausbringdüse (12) oder eines Weiterleitungsorgans auf ihrer Austrittsseite.

4. Vorrichtung gemäss einem der vorhergehenden Ansprüche, **dadurch gekennzeichnet, dass** die Mischmittel (3,9) mindestens zwei im Mischerkanal (4) axial hintereinander angeordnete und radial an die Mischerkanalwandung angrenzende Mischerflügel (9), insbesondere als Drallflügel (9) ausgestaltete Mischerflügel (9), umfassen, und insbesondere, dass axial hintereinander angeordnete Mischerflügel (9) derartig ausgestaltet sind, dass sie die durch den Mischerkanal (4) hindurchströmenden Komponenten abwechselnd in entgegen gesetzte Richtungen ablenken.

5. Vorrichtung gemäss einem der vorhergehenden Ansprüche, **dadurch gekennzeichnet, dass** der Statikmischer (1) einen das Mischerkanalgehäuse (5) und die Mischmittel (3, 9) umfassenden einstückigen oder mehrteiligen Mischereinsatz und ein den Mischereinsatz mit einer Öffnung in sich umschliessendes, separat vom Mischeinsatz ausgebildetes Gehäuseteil (2) aufweist.

6. Vorrichtung gemäss einem der vorhergehenden Ansprüche, **dadurch gekennzeichnet, dass** die Hauptkomponente ein hochviskoser Einkomponentenklebstoff und die Zusatzkomponente ein Aushärtebeschleuniger ist, und insbesondere, dass der Einkomponentenklebstoff PU ist.

7. Verfahren zur Herstellung mit unvermischter Hauptkomponente oder einer weiteren Komponente ummantelten eines Mischkomponentenstroms unter Verwendung einer Vorrichtung gemäss einem der Ansprüche 1 bis 6.

8. Verwendung einer Vorrichtung gemäss einem der Ansprüche 1 bis 6 zum Verarbeiten hochviskoser Einkomponentenklebstoffe mit Aushärtebeschleunigern, insbesondere für das Verarbeiten von hochviskosem PU mit Aushärtebeschleunigerpasten.

9. Verfahren zur Bildung eines Mischkomponentenstroms unter Verwendung einer Vorrichtung gemäss einem der Ansprüche 1 bis 6 aus einer ganz oder teilweise mit einer oder mehreren Zusatzkomponenten vermischten Hauptkomponente, welcher teilweise oder vollständig mit unvermischter Hauptkomponente oder einer weiteren Komponente ummantelt ist, **dadurch gekennzeichnet, dass** es die folgenden Schritte umfasst:
a) Vermischen eines Stroms aus Hauptkomponente und eines oder mehrerer Ströme aus einer oder mehreren reaktiven oder nicht reaktiven Zusatzkomponenten mit einem in einem Mischerkanal angeordneten statischen Mischelement zu einem ganz oder teilweise durchmischten Mischkomponentenstrom;
b) Zuführen eines oder mehrerer Ströme unvermischter Hauptkomponente oder einer weiteren Komponente im Mischerkanal in den Aussenbereich des ganz oder teilweise durchmischten Mischkomponentenstroms zur Bildung einer vollständigen oder teilweisen Ummantelung aus unvermischter Hauptkomponente oder aus der weiteren Komponente um den Mischkomponentenstrom herum.

10. Verfahren nach Anspruch 9, **dadurch gekennzeichnet, dass** die Hauptkomponente ein hochviskoser Einkomponentenklebstoff und die Zusatzkomponente ein Aushärtebeschleuniger ist, und insbesondere, dass der Einkomponentenklebstoff PU ist.

11. Anwendung des Verfahrens nach Anspruch 9 oder 10 zur Erzeugung einer Klebstoffraupe mit einem Kern aus PU mit schichtweise eingemischtem Aushärtebeschleuniger und einer Umhüllung aus unvermischtem PU für das Verkleben von Bauteilen miteinander.
